# EUROPÄISCHE PATENTSCHRIFT

(11) **EP 1 989 922 B1**
(45) Veröffentlichungstag und Bekanntmachung des Hinweises auf die Patenterteilung: **11.07.2012**
(21) Anmeldenummer: 07722948.2
(22) Anmeldetag: 27.02.2007
(51) Int. Cl.: H05B 1/02, H05B 3/74, G01K 15/00

(54) **VERFAHREN UND VORRICHTUNG ZUR ERKENNUNG EINES AN EINE STEUERUNG ANGESCHLOSSENEN TEMPERATURSENSORS**
METHOD AND APPARATUS FOR IDENTIFYING A TEMPERATURE SENSOR CONNECTED TO A CONTROLLER
PROCÉDÉ ET DISPOSITIF DE RECONAISSANCE D'UNE SONDE DE TEMPÉRATURE RACCORDÉ À UNE COMMANDE

(30) Priorität: 01.03.2006 DE 102006010107
(43) Veröffentlichungstag der Anmeldung: 12.11.2008
(73) Patentinhaber: E.G.O. ELEKTRO-GERÄTEBAU GmbH, 75038 Oberderdingen (DE)
(72) Erfinder: WILDE, Eugen, 75438 Knittlingen (DE); SCHILLING, Wilfried, 76703 Kraichtal (DE)
(74) Vertreter: Patentanwälte Ruff, Wilhelm, Beier, Dauster & Partner
(86) Internationale Anmeldenummer: PCT/EP2007/001652
(87) Internationale Veröffentlichungsnummer: WO 2007/098912

(56) Entgegenhaltungen:
- WO-A-02/10653
- WO-A-98/13677
- GB-A- 2 358 971
- GB-A- 2 404 293
- US-A- 6 118 105

## Beschreibung

### Anwendungsgebiet und Stand der Technik

Die Erfindung betrifft ein Verfahren und eine Vorrichtung zur Erkennung eines an eine Steuerung angeschlossenen Temperatursensors, der von der Steuerung ausgewertet wird um eine Temperatur zu erfassen, insbesondere wenn der Temperatursensor im Wirkungsbereich einer Heizeinrichtung angeordnet ist.

Es ist bekannt, Strahlungsheizkörper zur Beheizung von Glaskeramik-Kochfeldern mit einer Temperaturbegrenzungseinrichtung zu versehen. So kann ein Schutz der Glaskeramik gegen Überhitzung und daraus folgenden Wärmespannungsbruch erreicht werden. Eine solche Temperaturbegrenzungseinrichtung kann entweder ein elektromechanischer Temperaturregler in Form eines sogenannten Stabreglers sein, der die Abschaltung der Heizeinrichtung an dem Glaskeramik-Kochfeld bei Erreichen eines voreingestellten Schaltpunktes mit einer als kritisch angesehenen Temperatur bewirkt. Alternativ können elektronische Temperaturbegrenzungseinrichtungen vorgesehen sein mit einem Temperatursensor in Form eines temperaturabhängigen Widerstandes an der Heizeinrichtung und einer dazugehörigen elektronischen Begrenzungseinheit, insbesondere einer Steuerung.

Der Vorteil der zweiten Möglichkeit mit den Temperatursensoren liegt darin, dass zusätzlich zu der Schutzfunktion noch weitere Funktionen realisiert werden können, wie beispielsweise eine Heißanzeige für das Glaskeramik-Kochfeld mit einstellbarem Auslösepunkt, temperaturgeregelte Kochstellen bzw. Kochautomatiken odgl.. Als Temperatursensoren werden hier oft temperaturabhängige Metallfilmwiderstände eingesetzt, insbesondere Platin-Widerstände, beispielsweise sogenannte PT1000-Widerstands-Temperatursensoren. Diese sind zum einen jedoch teuer. Zum anderen ist ihre maximale Anwendungstemperatur bei vertretbaren Kosten mit ca. 750°C vor allem für den Einsatz bei Glaskeramik-Kochfeldern mit Strahlungsheizkörpern noch nicht ausreichend hoch für einen sicheren Betrieb. Somit können bekannte Temperatursensoren dieser Art nicht im direkten Wirkungsbereich der Strahlungsheizkörper platziert werden, sondern eher im Randbereich oder unter Abschirmungen odgl.. Dies verfälscht unter Umständen jedoch die Messung.

### Aufgabe und Lösung

Der Erfindung liegt die Aufgabe zugrunde, ein eingangs genanntes Verfahren und eine Vorrichtung zu schaffen, mit denen Nachteile des Standes der Technik vermieden werden können und insbesondere eine Alternative zu üblichen Platin-Temperatursensoren geschaffen werden kann, möglichst mit einer Vorrichtung, in der verschiedene Arten, Gruppen oder Typen von Temperatursensoren eingesetzt werden können.

Gelöst wird diese Aufgabe durch ein Verfahren mit den Merkmalen des Anspruchs 1 sowie eine Vorrichtung mit den Merkmalen des Anspruchs 12. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Erfindungsgemäß ist in der Steuerung beim Anschluss der Steuerung an Netzspannung oder Betriebsspannung, beispielsweise beim Einstecken des Netzsteckers eines entsprechenden elektrischen Gerätes in eine Steckdose, vorgesehen, dass in einem ersten Schritt der Widerstandswert des angeschlossenen Temperatursensors überprüft bzw. gemessen wird. In einem späteren bzw. zweiten Schritt wird der gemessene Widerstandswert mit wenigstens einem vorgegebenen Grenzwert verglichen, bevorzugt mit einem einzigen vorgegebenen Grenzwert. Unter Grenzwert wird hier im wesentlichen eine Grenzwertkurve verstanden, die einen bestimmten Temperaturverlauf aufweist. Die Grenzwertkurve verläuft stets zwischen den Temperaturverläufen der Widerstandswerte. Durch einen derartigen Grenzwert können mindestens zwei unterschiedliche Gruppen von Temperatursensoren hinsichtlich ihres Widerstandswertes charakterisiert werden. Vorteilhaft liegen die Widerstandswerte der beiden Gruppen von Temperatursensoren ausreichend deutlich über bzw. unter dem Grenzwert, damit eine Unterscheidung leicht und mit sehr großer Sicherheit und Deutlichkeit möglich ist. In einem weiteren bzw. dritten Schritt wird der Temperatursensor in eine der Gruppen von Temperatursensoren eingeordnet. Überschreitet er den Grenzwert, so wird er in eine erste Gruppe von Temperatursensoren eingeordnet. Unterschreitet er den Grenzwert, so wird er in eine zweite Gruppe eingeordnet. Dabei ist auch vorgesehen, dass der Temperatursensor, den erkannt werden soll, nicht einen beliebigen Widerstandswert aufweist, sondern aus einer der vorbekannten Gruppen von Temperatursensoren stammt. In einem weiteren bzw. vierten Schritt ändert die Steuerung abhängig von der Zugehörigkeit bzw. der Einordnung des Temperatursensors in eine der Gruppen von Temperatursensoren die Ansteuerung und/oder Auswertung des Temperatursensors, was auch als Anpassung in Form einer Kalibrierung erfolgen kann. Insbesondere wird also das nachfolgende Auswerten des Temperatursensors durch die Steuerung nicht durch seinen individuell ermittelten Widerstandswert bestimmt, sondern durch einen, der für die entsprechende Gruppe, in die der Temperatursensor eingeordnet worden ist, als charakteristisch bzw. sozusagen prototypisch gilt.

Auf die genannte Art und Weise ist es möglich, einen Temperatursensor, der aus zwei oder mehr Gruppen von Temperatursensoren mit jeweils einigermaßen gut bekannten und genau definierten Eigenschaften stammen kann, in diese Gruppe einzuordnen mit einem relativ einfachen und doch sicheren Verfahren. Vor allem kann eine Fehlfunktion der Steuerung bzw. ein Fehlerfall dadurch vermieden werden, dass beim Austausch eines defekten Temperatursensors der einen Gruppe ein neuer Temperatursensor der anderen Gruppe eingesetzt wird, ohne dass hierfür extra eine manuelle bzw. separate Anpassung in der Steuerung notwendig wird, welche unter Umständen auch vergessen werden kann, was zu einer Fehlfunktion führen würde.

Vorteilhaft wird der Widerstandswert des Temperatursensors bei dem genannten Neustart des Elektrogerätes bzw. der Steuerung im Kaltzustand bzw. bei Raumtemperatur gemessen und ausgewertet, insbesondere also noch vor Betrieb der Heizeinrichtung. Aufgrund dieser Messung im Kaltzustand wird der Vergleich mit den genannten Grenzwerten durchgeführt bzw. eine Einteilung in die Gruppen von Temperatursensoren. Dies weist den Vorteil auf, dass dieser Kaltzustand üblicherweise nur keine Schwankungen aufweist, so dass eine gesicherte Ausgangsbasis für die Messungen bzw. die Vergleichsmessung gegeben ist.

In weiterer Ausgestaltung der Erfindung kann die Änderung des Widerstandswertes beim ersten Aufheizen bzw. Betrieb der Heizeinrichtung nach dem Anschließen an das Netz erfasst bzw. ausgewertet werden und in die Auswertung einfließen. Es wird also nicht nur ein Widerstandswert im Kaltzustand gemessen, sondern auch eine Widerstandsänderung. Daraus können unter Umständen weitere Charakteristika für die Zuordnung des Temperatursensors in eine der Gruppen gewonnen werden. Vorteilhaft kann dabei zuerst der Widerstandswert im Kaltzustand gemessen und ausgewertet werden. Danach wird die Änderung des Widerstandswertes beim Aufheizen bzw. Betrieb der Heizeinrichtung gemessen und ausgewertet. Dies ist insbesondere ein insofern festgelegter Vorgang, als entweder eine Widerstandsdifferenz oder eine bestimmte Zeitdifferenz definiert sind, um das Verhalten der Widerstandsänderung des Temperatursensors zu erfassen und auszuwerten. Des weiteren kann dadurch eine Art zusätzliche Funktionskontrolle des neu eingesetzten Temperatursensors bzw. auch eines bereits seit längerem verwendeten Temperatursensors erfolgen. Der genannte Schritt kann beispielsweise nach dem vorgenannten dritten Schritt anhand des Vergleichs mit dem Grenzwert durchgeführt werden.

Eine erste Gruppe von Temperatursensoren kann im Kaltzustand einen Widerstandswert von etwa 1000 Ohm bzw. in dieser Größenordnung aufweisen. Insbesondere sind dies vorgenannte Platin-Temperatursensoren.

Eine zweite Gruppe von Temperatursensoren kann eine um den Faktor zwei bis fünf niedrigeren Widerstandswert im Kaltzustand aufweisen, beispielsweise etwa 300 Ohm. Vorteilhaft sind es hochtemperaturfeste Temperatursensoren, beispielsweise aus Wolfram, einer Wolfram-Legierung oder ähnlichen Metallen.

Die Heizeinrichtung ist vorteilhaft eine Strahlungsheizeinrichtung, insbesondere in der Art, wie sie in Glaskeramik-Kochfeldern eingesetzt wird. Entweder ist dies mit offen liegenden Heizleitern und Temperaturen von etwas über 1000°C oder als sogenannte Halogen-Strahlungsheizer mit weitaus höheren Temperaturen.

Eine vorgenannte Kalibrierung bzw. Erkennung des Temperatursensors kann nicht nur nach einem erneuten Netzanschluss erfolgen, sondern auch beispielsweise in festgelegten Zeitabständen erfolgen. Entweder kann dies die gesamte Lebensdauer des Elektrogerätes sein oder aber eine erfasste und aufaddierte Betriebsdauer. So kann ein allmähliches Degradieren eines Temperatursensors erkannt werden um ihn rechtzeitig auszutauschen.

Des Weiteren ist es möglich, vor der Kalibrierung bzw. dem vorgenannten ersten Schritt die Umgebungstemperatur zu erfassen. Dazu kann ein Thermistor odgl. verwendet werden. So kann der beim Anschluss an das Netz ermittelte Widerstandswert des Temperatursensors zugeordnet werden unter Verwendung der erfassten und bekannten Umgebungstemperatur. Dadurch können Abweichungen bzw. Ungenauigkeiten aufgrund unterschiedlicher Raumtemperatur ausgeglichen werden.

Alternativ zu einer Kalibrierung in festgelegten Zeitabständen kann sie jedes Mal erfolgen, wenn die Steuerung bzw. das entsprechende Elektrogerät vom Netz getrennt war und danach wieder angeschlossen wurde. In einer weiteren Ausgestaltung der Erfindung kann vorgesehen sein, dass jedes Mal beim Einschalten des Elektrogerätes bzw. der Heizeinrichtung aus dem Kaltzustand heraus bzw. nach einer Zeitdauer von einigen Stunden die Kalibrierung erfolgt. Dies dient insbesondere dazu, um Altern oder Degradieren des Temperatursensors rechtzeitig zu erkennen. Dabei ist es auch möglich, beim Einschalten der Heizeinrichtung einen neuen Startpunkt für die Kennlinie des Temperatursensors ausgehend von dessen erfasstem Widerstandswert im Kaltzustand zu ermitteln und ihn in der Steuerung für die Temperaturbestimmung zu verwenden. Dies ist insbesondere auch dadurch möglich, dass die Steuerung weiß bzw. es einprogrammiert sein kann, wie sich die Temperatur an dem Temperatursensor beim Start der Heizeinrichtung verändert. Somit kann eine derartige Kennlinie in der Steuerung abgespeichert sein bzw. für die Temperaturerfassung verwendet werden. Unter Umständen kann im Rahmen der Kalibrierung nicht nur die Einstufung des Temperatursensors in eine der genannten Gruppen von Temperatursensoren erfolgen, sondern auch eine Anpassung der Kennlinie. Insbesondere verändert sich bei einer derartigen Kennlinie hauptsächlich der Startpunkt, so dass sich diese nur durch eine Verschiebung ändert.

Des weiteren ist es zur Überwachung der Funktion des Temperatursensors möglich, sprungartige Veränderungen des Widerstandswertes des Temperatursensors beim Betrieb der Heizeinrichtung zu erfassen, insbesondere wenn sie gegen unendlich oder gegen Null gehen, also eine Unterbrechung oder ein Kurzschluss. Da dies entscheidende Fehlerfälle sind und der Temperatursensor als sehr sicherheitsrelevantes Teil angesehen wird, führt dies zum Ausschalten der Heizeinrichtung. Verbunden damit kann eine Signalausgabe an eine Bedienperson erfolgen, damit diese auf den Schadensfall aufmerksam wird. Insbesondere kann die Signalausgabe akustisch und/oder optisch erfolgen, vorteilhaft mit beiden Methoden. Dabei können Signalmittel verwendet werden, die auch noch weitere Funktionen erfüllen bzw. für weitere Signalausgaben gedacht sind.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ein Ausführungsbeispiel der Erfindung ist in zwei Varianten in den Zeichnungen schematisch dargestellt und wird im Folgenden näher erläutert. In den Zeichnungen zeigt:
- Fig. 1: eine Seitenansicht eines Kochfeldes mit Steuerung zur Durchführung des erfindungsgemäßen Verfahrens und
- Fig. 2: verschiedene Kurven des elektrischen Widerstandes über der Temperatur zum Eingruppieren eines Temperatursensors in eine bestimmte Gruppe.

### Detaillierte Beschreibung des Ausführungsbeispiels

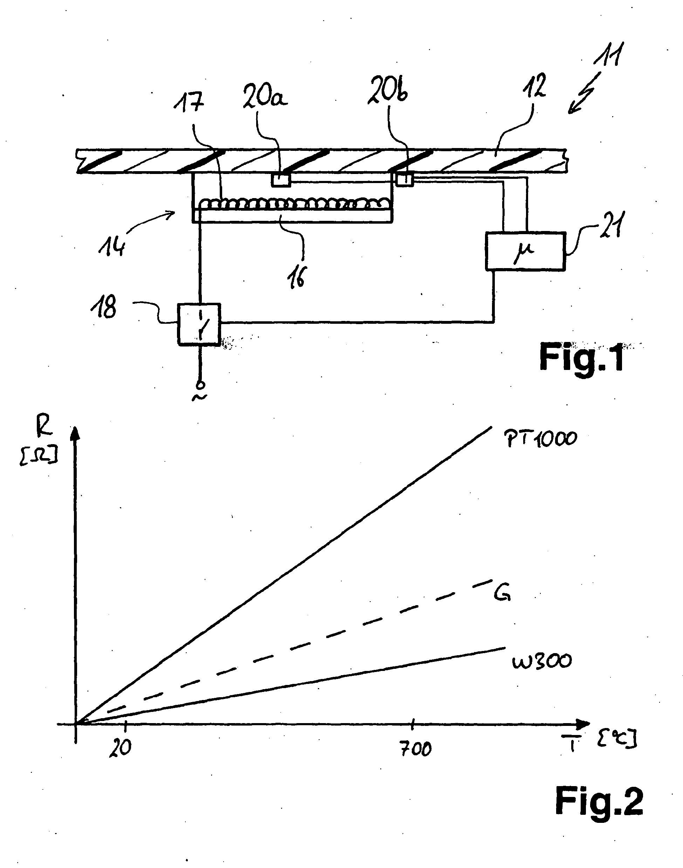

In Fig. 1 ist ein Kochfeld 11 mit einer Kochfeldplatte 12 dargestellt. Unter dieser befindet sich ein an sich üblicher Strahlungsheizkörper 14 als Heizeinrichtung. Dieser weist auf einem Träger 16 aus isolierendem Material einen Heizleiter 17 auf, beispielsweise als aufrecht stehendes gewendeltes Flachband. Angesteuert wird der Strahlungsheizkörper 14 über einen Schalter 18, beispielsweise ein Relais. Dazu kann unter anderem auch die Steuerung 21 dienen, alternativ elektromechanische Regeleinrichtungen.

Im oberen Bereich des Strahlungsheizkörpers 14 sind zwei alternativ verwendbare Temperatursensoren 20a und 20b dargestellt. Der Temperatursensor 20a ist im direkten Einflussbereich bzw. Heizbereich des Strahlungsheizkörpers 14 und des Heizleiters 17 angeordnet. Somit ist er Temperaturen um die 1000°C maximal ausgesetzt, üblicherweise etwas darunter. Seine Temperaturerfassungswirkung kann entweder nach unten gerichtet sein, also auf den Heizleiter 17 zu. Alternativ kann er an seiner Oberseite, möglichst mit Abschirmung nach unten, hauptsächlich die Temperatur der Kochfeldplatte 12 bzw. ihrer Unterseite erfassen. Dies dient dazu, die Kochfeldplatte 12 vor Beschädigung durch zu hohe Temperatur aufgrund des Strahlungsheizkörpers 14 zu schützen. Dies ist ein dem Fachmann auf dem Gebiet von Kochfeldern, insbesondere mit Kochfeldplatten aus Glaskeramik, bekanntes Problem. Die hier dargestellten und behandelten Temperatursensoren 20 sollen die ansonsten verwendeten elektromechanischen Temperaturerfassungseinrichtungen, sogenannte Stabregler, möglichst ersetzen.

Der Temperatursensor 20b ist außerhalb des Strahlungsheizkörpers 14 angeordnet. Er kann ebenfalls zur Temperaturbestimmung der Kochfeldplatte 12 bzw. ihrer Unterseite dienen. Alternativ kann er die Umgebungstemperatur erfassen und überwachen. In weiterer Ausgestaltung der Erfindung gibt es noch weitere Möglichkeiten zur Anordnung eines entsprechenden Temperatursensors. Insbesondere ist es auch möglich, mehrere solcher Temperatursensoren an einem Strahlungsheizkörper vorzusehen.

Die Temperatursensoren 20a und 20b sind als elektrische Widerstände ausgebildet bzw. weisen einen elektrischen Widerstand auf. Sie sind mit der Steuerung 21 verbunden, welche die Widerstände ansteuert bzw. auswertet zur Temperaturbestimmung. Wie dargestellt ist, kann die Steuerung 21 auch mit dem Schalter 18 verbunden sein. Entweder kann sie ihn aktivieren oder zumindest seinen Aktivierungszustand erfassen, was für die Temperaturauswertung und insbesondere auch die Überwachung des Temperatursensors 20 von Vorteil ist.

In Fig. 2 sind zwei typische Widerstandskurven über der Temperatur aufgezeichnet. Einmal ist dies für einen sogenannten PT1000-Widerstand, einen üblicherweise und oft für Temperaturmessungen verwendeten elektrischen Widerstand. Er zeichnet sich durch hohe Linearität des Verlaufs aus. Die weitere Kurve zeigt einen Temperatursensor aus Wolfram oder einer Wolfram-Legierung. Er kann gasdicht verschlossen sein, beispielsweise in einem Quarzglasrohr. Der Vorteil eines Temperatursensors mit oder Wolfram besteht darin, dass er im Vergleich zu der maximalen Anwendungstemperatur von Platin-Messwiderständen mit akzeptablem Kostenrahmen bei etwa 750°C eine wesentlich höhere Temperatur verträgt, beispielsweise bis 900°C. Damit ist ein Einsatz über einem Strahlungsheizkörper, wie dargestellt, problemlos möglich. Des weiteren sind die Anschaffungskosten niedriger.

Da sich der Verlauf des Widerstands über der Temperatur bei einem Wolfram-Sensor, beispielsweise einem W300-Sensor, erheblich von einem PT1000-Platin-Sensor unterscheidet, hat dies für die Temperaturbestimmung natürlich erhebliche Auswirkungen. Um nun zu verhindern, dass bei einem Austausch eines defekten Temperatursensors die falsche Art von Temperatursensor eingesetzt wird, beispielsweise ein Wolfram-Temperatursensor anstelle eines Platin-Temperatursensors, wird die Unterteilung in verschiedene bzw. zwei Gruppen von Temperatursensoren vorgenommen. Dazu dient der gestrichelt eingezeichnete Grenzwert bzw. Grenzwertverlauf G. Er kann beispielsweise in der Mitte der beiden eingezeichneten Kurven für die Temperatursensoren liegen, allgemein einfach dazwischen. Bereits bei Raumtemperatur unterscheiden sich die Ausgangswiderstände der beiden Gruppen, bzw. einer liegt über und der andere unter dem entsprechenden Grenzwert. Damit ist die erste Möglichkeit einer Eingruppierung eines tatsächlich eingesetzten Temperatursensors möglich, beispielsweise wenn dieser bei einem Reparaturfall ausgetauscht worden ist.

In weiterer Ausgestaltung des Verfahrens passt sich die Steuerung abhängig von dieser Erkennung an den erkannten Temperatursensor an. Die Steuerung geht also grundsätzlich nicht von den individuellen Eigenschaften des eingesetzten Temperatursensors aus zur Kalibrierung, sondern bestimmt anhand dessen individueller Eigenschaften die Zugehörigkeit zu einer der Gruppen. Dann geht sie von den eingespeicherten Eigenschaften dieser Gruppe aus. In weiterer Ausgestaltung der Erfindung ist es auch möglich, eine weitere Messung nach einem gewissen Aufheizen bzw. Betrieb des Strahlungsheizkörpers vorzunehmen. Diese Informationen zum Betrieb kann die Steuerung 21 eben über die Verbindung zu dem Schalter 18 erhalten. In einer nochmals weiteren Ausbildung der Erfindung ist es möglich, bestimmte definierte Zustände im Heizbetrieb einzunehmen und das entsprechende Verhalten des Temperatursensors zu überwachen sowie eine weitere Kalibrierung oder unter Umständen Fehlermeldung vorzunehmen, wenn ein gewisses oder zu starkes Abweichen des Temperatursensors vorliegt. Vor allem soll die Erfindung allgemein dazu dienen, dass die Steuerung automatisch erkennt, ob ein Temperatursensor aus einer der beiden Gruppen eingesetzt ist, so dass sie sich darauf einstellen kann.

Die vorbeschriebene Möglichkeit der Feststellung der Umgebungstemperatur beim Starten der ersten Temperaturmessung in einem Thermistor ist hier nicht explizit dargestellt bzw. der Thermistor ist nicht explizit dargestellt. Er kann jedoch an beliebiger Stelle, insbesondere nahe an der Steuerung 21, vorgesehen sein. Dies ist für den Fachmann ohne Weiteres ausführbar.

Beim Betrieb des Strahlungsheizkörpers 14 erfasst die Steuerung 21 über den Temperatursensor 20a oder 20b die Temperatur. Dabei ist es von Vorteil, wenn im Falle des Feststellens eines deutlichen Sprungs der Temperatur als Anstieg oder auch Absinken ein Fehlerfall festgestellt werden kann mit entsprechender Reaktion der Steuerung, insbesondere mit einem Warnsignal sowie einem sofortigen Abschalten des Strahlungsheizkörpers 14.

## Patentansprüche

1. Verfahren zur Erkennung eines an eine Steuerung (21) angeschlossenen und von dieser ausgewerteten Temperatursensors (20a, 20b), der insbesondere im direkten Wirkungsbereich einer Heizeinrichtung (14) angeordnet ist, **dadurch gekennzeichnet, dass** in der Steuerung (21) beim Anschluß der Steuerung an Netzspannung oder Betriebsspannung in einem ersten Schritt der Widerstandswert des angeschlossenen Temperatursensors (20a, 20b) überprüft bzw. gemessen wird und in einem zweiten Schritt mit wenigstens einem vorgegebenen Grenzwert (G) verglichen wird, wobei der Grenzwert (G) mindestens zwei unterschiedliche Gruppen von Temperatursensoren (20a, 20b) hinsichtlich des Widerstandswertes charakterisiert, wobei in einem dritten Schritt der Temperatursensor:
- bei Überschreiten des Grenzwertes (G) als einer ersten Gruppe von Temperatursensoren (20a, 20b) zugehörig eingeordnet wird und
- bei Unterschreiten des Grenzwertes (G) einer zweiten Gruppe von Temperatursensoren (20a, 20b) zugehörig eingeordnet wird,
wobei in einem vierten Schritt die Steuerung (21) abhängig von der Zugehörigkeit bzw. der Einordnung des Temperatursensors in eine der beiden Gruppen die Ansteuerung und/oder Auswertung des Temperatursensors ändert bzw. anpasst als Kalibrierung, insbesondere an seinen Widerstandswert gemäß einer der Gruppen von Temperatursensoren.

2. Verfahren nach Anspruch 1, **dadurch gekennzeichnet, dass** der Widerstandswert des Temperatursensors (20a, 20b) zuerst im Kaltzustand bzw. bei Raumtemperatur ausgewertet wird.

3. Verfahren nach Anspruch 1 oder 2, **dadurch gekennzeichnet, dass** die Änderung des Widerstandswertes beim ersten Aufheizen der Heizeinrichtung (14) nach dem Anschließen an das Netz erfasst bzw. ausgewertet wird und in die Auswertung einfließt, wobei vorzugsweise zuerst der Widerstandswert im Kaltzustand bzw. bei Raumtemperatur gemessen und ausgewertet wird und danach die Änderung des Widerstandswertes beim Aufheizen gemessen und ausgewertet wird, insbesondere eine Änderung um eine bestimmte Widerstandsdifferenz oder innerhalb einer bestimmten Zeitdifferenz.

4. Verfahren nach einem der vorhergehenden Ansprüche, **dadurch gekennzeichnet, dass** die erste Gruppe von Temperatursensoren (20a, 20b) einen Widerstandswert im Kaltzustand von etwa 1000 Ohm aufweist, wobei sie insbesondere Platin-Temperatursensoren aufweist, vorzugsweise als PT1000-Widerstands-Temperatursensor.

5. Verfahren nach einem der vorhergehenden Ansprüche, **dadurch gekennzeichnet, dass** die zweite Gruppe von Temperatursensoren (20a, 20b) einen Widerstandswert im Kaltzustand von etwa 300 Ohm aufweist, wobei es vorzugsweise hochtemperaturfeste Temperatursensoren sind, insbesondere Temperatursensoren aus Wolfram oder einer Wolfram-Legierung.

6. Verfahren nach einem der vorhergehenden Ansprüche, **dadurch gekennzeichnet, dass** die Heizeinrichtung eine Strahlungsheizeinrichtung (14) ist, insbesondere in einem Temperaturbereich bis zu 1100°C.

7. Verfahren nach einem der vorhergehenden Ansprüche, dass die Kalibrierung nach einem festgelegten Zeitabstand erfolgt durch Durchführen der vier Schritte.

8. Verfahren nach einem der vorhergehenden Ansprüche, **dadurch gekennzeichnet, dass** die Kalibrierung erfolgt, sobald die Steuerung (21) vom Netz getrennt war und wieder angeschlossen wurde.

9. Verfahren nach einem der vorhergehenden Ansprüche, **dadurch gekennzeichnet, dass** vor der Kalibrierung bzw. dem ersten Schritt die Umgebungstemperatur mit einem Thermistor odgl. ermittelt wird und der beim Anschließen an das Netz ermittelte Widerstandswert des Temperatursensors (20a, 20b) in Abhängigkeit von der erfassten Umgebungstemperatur zugeordnet wird.

10. Verfahren nach einem der vorhergehenden Ansprüche, **dadurch gekennzeichnet, dass** die Kalibrierung erfolgt, sobald die Heizeinrichtung (14) mindestens sechs Stunden ausgeschaltet war bzw. die Temperatursensoren (20a, 20b) in etwa Kaltzustand bzw. Raumtemperatur anzeigen, wobei vorzugsweise beim Einschalten einer Heizeinrichtung (14) ein neuer Startpunkt für die Kennlinie des Temperatursensors (20a, 20b) in der Steuerung (21) bestimmt wird, anhand derer die Temperaturbestimmung in der Steuerung erfolgt.

11. Verfahren nach einem der vorhergehenden Ansprüche, **dadurch gekennzeichnet, dass** sprungartige Veränderungen während des Betriebes des Widerstandswertes des Temperatursensors (20a, 20b) gegen unendlich oder gegen Null als Schadensfall, insbesondere Unterbrechung oder Kurzschluss, ausgewertet werden und zum Ausschalten der Heizeinrichtung (14) führen, vorzugsweise verbunden mit einer Signalausgabe an eine Bedienperson.

12. Vorrichtung zur Durchführung des Verfahrens nach einem der vorgehenden Ansprüche, **gekennzeichnet durch** eine Heizeinrichtung (14) mit daran angeordnetem Temperatursensor (20a, 20b) sowie einer mit dem Temperatursensor verbundenen Steuerung (21).

## Claims

1. Method for identifying a temperature sensor (20a, 20b) connected to a control unit (21) and evaluated by the latter and which is in particular located in the direct action area of a heating device (14), **characterized in that** on connecting the control unit (21) to the mains or operating voltage in a first step the resistance value of the connected temperature sensor (20a, 20b) is monitored or measured and in a second step is compared with at least one preset limit value (G), said limit value (G) characterizing at least two different groups of temperature sensors (20a, 20b) with respect to the resistance value, and in a third step the temperature sensor:
- on exceeding the limit value (G) is classified as belonging to a first group of temperature sensors (20a, 20b), and
- on dropping below the limit value (G) is classified as belonging to a second group of temperature sensors (20a, 20b),
and in a fourth step and in response to the association or classification of the temperature sensor in one of the two groups, control unit (21) modifies or adapts the control and/or evaluation of the temperature sensor as a calibration, particularly to a resistance value according to one of the groups of temperature sensors.

2. Method according to claim 1, **characterized in that** the resistance value of the temperature sensor (20a, 20b) is firstly evaluated in the cold state or at room temperature.

3. Method according to claim 1 or 2, **characterized in that** the change of the resistance value on the first heating of the heating device (14) following connection to the mains is detected or evaluated and is incorporated into the evaluation, and preferably firstly the resistance value is measured and evaluated in the cold state or at room temperature, and then the change of the resistance value on heating is measured and evaluated, particularly a change by a specific resistance difference or within a specific time difference.

4. Method according to any of the preceding claims, **characterized in that** the first group of temperature sensors (20a, 20b) has a resistance value in the cold state of approximately 1000 Ohm, and in particular has platinum temperature sensors, preferably a PT1000 resistor temperature sensor.

5. Method according to any of the preceding claims, **characterized in that** the second group of temperature sensors (20a, 20b) has a resistance value in the cold state of approximately 300 Ohm, and they are preferably high-temperature-resistant temperature sensors, particularly tungsten or tungsten alloy temperature sensors.

6. Method according to any of the preceding claims, **characterized in that** the heating device is a radiant heater (14), particularly in a temperature range up to 1100 °C.

7. Method according to any of the preceding claims, **characterized in that** the calibration takes place following a fixed time interval by performing the four steps.

8. Method according to any of the preceding claims, **characterized in that** calibration takes place as soon as the control unit (21) has been separated from the mains and reconnected.

9. Method according to any of the preceding claims, **characterized in that** prior to calibration or the first step the ambient temperature is established using a thermistor or the like and the resistance value of the temperature sensor (20a, 20b) determined on connection to the mains is related as a function of the established ambient temperature.

10. Method according to any of the preceding claims, **characterized in that** calibration takes place as soon as the heating device (14) has been switched off for at least six hours or the temperature sensors (20a, 20b) roughly have a cold state or ambient temperature, and preferably on switching on a heating device (14) a new starting point for the characteristic of the temperature sensor (20a, 20b) is determined in control unit (21) and by means of which temperature determination takes place in said control unit.

11. Method according to any of the preceding claims, **characterized in that** sudden changes during the operation of the resistance value of the temperature sensor (20a, 20b) towards infinity or zero are evaluated as a defect, particularly an interruption or short-circuit, and lead to a disconnection of the heating device (14), preferably associated with a signal output to an operator.

12. Device for performing the method according to any of the preceding claims, **characterized by** a heating device (14) with a temperature sensor (20a, 20b) arranged thereon, and a control unit (21) connected to the temperature sensor.

## Revendications

1. Procédé destiné à identifier un capteur de température (20a, 20b) connecté à une unité de commande (21) et évalué par celle-ci, lequel capteur est notamment disposé dans la zone d'influence directe d'un dispositif chauffant (14), **caractérisé en ce que**, lors de la connexion de l'unité de commande à la tension du secteur ou à la tension de fonctionnement lors d'une première étape, la valeur de résistance du capteur de température (20a, 20b) connecté est vérifiée ou mesurée dans l'unité de commande (21), et est comparée lors d'une deuxième étape à au moins une valeur limite prédéterminée (G), dans lequel la valeur limite (G) caractérise au moins deux groupes différents de capteurs de température (20a, 20b) en ce qui concerne la valeur de résistance, dans lequel, lors d'une troisième étape, le capteur de température:
- est classé comme appartenant à un premier groupe de capteurs de température (20a, 20b) lorsque la valeur limite (G) est dépassée, et
- est classé comme appartenant à un deuxième groupe de capteurs de température (20a, 20b) lorsque la valeur limite (G) n'est pas atteinte,
dans lequel, lors d'une quatrième étape, l'unité de commande (21), en fonction de l'appartenance du capteur de température à l'un des deux groupes, modifie la commande et/ou l'évaluation du capteur de température et l'ajuste à sa valeur de résistance au titre d'étalonnage, notamment en fonction de l'un des groupes de capteurs de température.

2. Procédé selon la revendication 1, **caractérisé en ce que** la valeur de résistance du capteur de température (20a, 20b) est tout d'abord évaluée à l'état froid ou à la température ambiante.

3. Procédé selon la revendication 1 ou 2, **caractérisé en ce que** la variation de la valeur de résistance lors d'un premier chauffage du dispositif chauffant (14), après la connexion au secteur, est détectée ou évaluée et est intégrée à l'évaluation, la valeur de résistance étant de préférence tout d'abord mesurée et évaluée à l'état froid ou à la température ambiante, et la variation de la valeur de résistance étant ensuite mesurée et évaluée lors du chauffage, laquelle variation est notamment une variation égale à une différence de résistance déterminée ou se produisant en moins d'une différence de temps déterminée.

4. Procédé selon l'une quelconque des revendications précédentes, **caractérisé en ce que** le premier groupe de capteurs de température (20a, 20b) présente une valeur de résistance à l'état froid d'environ 1000 ohms, ce groupe comprenant notamment des capteurs de température en platine, de préférence sous la forme d'un capteur de température à résistance PT1000.

5. Procédé selon l'une quelconque des revendications précédentes, **caractérisé en ce que** le deuxième groupe de capteurs de température (20a, 20b) présente une valeur de résistance à l'état froid d'environ 300 ohms, ces capteurs étant de préférence des capteurs de température résistant aux températures élevées, notamment des capteurs de température en tungstène ou en alliage de tungstène.

6. Procédé selon l'une quelconque des revendications précédentes, **caractérisé en ce que** le dispositif chauffant comprend un dispositif chauffant par rayonnement (14), notamment dans une plage de températures allant jusqu'à 1100°C.

7. Procédé selon l'une quelconque des revendications précédentes, **caractérisé en ce que** l'étalonnage est effectué après un intervalle de temps fixe par exécution des quatre étapes.

8. Procédé selon l'une quelconque des revendications précédentes, **caractérisé en ce que** l'étalonnage est effectué dès que l'unité de commande (21) a été séparée du secteur et a été reconnectée.

9. Procédé selon l'une quelconque des revendications précédentes, **caractérisé en ce qu'**avant l'étalonnage ou avant la première étape, la température ambiante est déterminée au moyen d'une thermistance ou autre et **en ce que** la valeur de résistance du capteur de température (20a, 20b) déterminée lors de la connexion au secteur est attribuée en fonction de la température ambiante détectée.

10. Procédé selon l'une quelconque des revendications précédentes, **caractérisé en ce que** l'étalonnage est effectué lorsque le dispositif chauffant (14) a été désactivé pendant au moins six heures ou lorsque les capteurs de température (20a, 20b) fonctionnent dans un état approximativement froid ou à la température ambiante, dans lequel, lors de l'activation d'un dispositif chauffant (14) un nouveau point de départ de la courbe caractéristique du capteur de température (20a, 20b), à partir de laquelle s'effectue la détermination de température dans l'unité de commande, est de préférence déterminé dans l'unité de commande (21).

11. Procédé selon l'une quelconque des revendications précédentes, **caractérisé en ce que** de brusques variations vers l'infini ou vers zéro se produisant pendant la mise en oeuvre de la valeur de résistance du capteur de température (20a, 20b) sont interprétées comme étant un cas de panne, notamment un circuit ouvert ou un court-circuit, et conduisent à la désactivation du dispositif chauffant (14), de préférence en association avec l'envoi d'un signal à un opérateur.

12. Dispositif destiné à mettre en oeuvre le procédé selon l'une quelconque des revendications précédentes, **caractérisé par** un dispositif chauffant (14) comprenant un capteur de température (20a 20b) disposé sur celui-ci et une unité de commande (21) connectée au capteur de température.
